# DEMANDE DE BREVET EUROPEEN

(11) **EP 0 896 293 A1**
(43) Date de publication de la demande: **10.02.1999**
(21) Numéro de dépôt: 98390009.3
(22) Date de dépôt: 07.07.1998
(51) Int. Cl.: G06K 7/10

(54) **Dispositif optoélectronique d'aquisition multidirectionnelle d'images de plans-objets, notamment de codes à barres**

(30) Priorité: 30.07.1997 FR 9709843
(71) Demandeur: INTERMEC SCANNER TECHNOLOGY CENTER, 31670 Labege Cédex (FR)
(72) Inventeur: Massieu, Jean-Louis, 82000 Montauban (FR); Thuries, Serge, 31240 Saint Jean (FR)
(74) Mandataire: Cabinet BARRE LAFORGUE & associés

(57) **Abrégé**

L'invention concerne un dispositif optoélectronique d'acquisition multidirectionnelle d'images comprenant des moyens de déviation (18, 19) et de rétrocollection (11) indépendants, et dont les moyens de déviation comprennent deux miroirs (18, 19) s'étendant selon des axes orthogonaux et montés chacun sur des moyens moteurs (16, 17) aptes à les faire osciller avec une amplitude déterminée entre deux positions autour de leur axe, et des moyens de commande adaptés pour permettre d'alimenter lesdits moyens moteurs soit avec une fréquence adaptée pour faire osciller le miroir (18, 19) entre ses deux positions, soit avec une fréquence élevée apte à stabiliser le miroir (19, 18) entre ses deux positions, en commandant de plus une variation continuelle du rapport cyclique d'alimentation.

## Description

L'invention concerne un dispositif optoélectronique d'acquisition multidirectionnelle d'images de plans-objets, notamment de codes à barres, du type comprenant :
- une source d'éclairage apte à délivrer un faisceau incident d'éclairage,
- des moyens de déviation du faisceau incident aptes à amener ledit faisceau à balayer les plans-objets selon des modes de balayage prédéterminés,
- un capteur électronique d'acquisition des images,
- et des moyens de rétro-collection aptes à permettre de former des images sur le capteur.

De tels lecteurs multidirectionnels sont particulièrement adaptés pour être utilisés dans le domaine industriel, en poste fixe devant un convoyeur sur lequel défilent des objets sur lesquels sont apposés les codes à barres.

Pour de telles applications industrielles, il est, en effet, nécessaire d'utiliser des lecteurs omnidirectionnels car les codes à barres apposés sur les objets peuvent présenter des orientations différentes, notamment s'étendre soit horizontalement, soit verticalement. De plus, les lecteurs doivent permettre une saisie instantanée des codes à barres afin d'autoriser des vitesses de convoyage relativement élevées des objets. Enfin, ces lecteurs doivent présenter des modes de balayage des codes à barres garantissant la saisie systématique de chaque code. En effet, l'objet à identifier défile sur un convoyeur, et n'est donc présenté qu'une seule fois devant le lecteur, ce qui exclut tout risque d'erreur de lecture telle que permise par exemple dans les points de vente où l'objet peut être présenté à nouveau devant le lecteur.

A l'heure actuelle, il existe trois types principaux de lecteurs multidirectionnels utilisés dans le domaine industriel.

Le premier type de lecteurs, tels que décrits notamment dans les brevets US-5 464 972 et EP-697 674, est conçu principalement pour délivrer un faisceau vers un miroir rotatif à une ou plusieurs facettes déviant ledit faisceau vers une pluralité de miroirs fixes encadrant partiellement ou entièrement le miroir rotatif. Tel qu'explicité dans ces brevets, cette conception permet d'obtenir un balayage omnidirectionnel consistant en une pluralité de lignes de balayage s'étendant selon des orientations différentes. L'inconvénient majeur de ce type de lecteurs réside dans le fait que l'on obtient un balayage pseudo-aléatoire non optimisé qui impose des vitesses de convoyage relativement faibles en vue de garantir une lecture systématique de chaque code à barres.

Le deuxième type de lecteurs, tels que décrits dans le brevet EP-323 026, comprend principalement un premier miroir rotatif dont la normale est inclinée de quelques degrés par rapport à l'axe de rotation, adapté pour délivrer un faisceau en forme de cône vers un second miroir de même conception, entraîné en rotation avec une vitesse inférieure à celle du premier miroir. Cette conception permet d'obtenir un balayage omnidirectionnel en forme de "rosette" qui conduit toutefois aux mêmes inconvénients que ceux du premier type de lecteur précité.

Enfin, le troisième type de lecteurs, tels que décrits notamment dans les brevets US-5 371 347 et US-5 187 612, comporte principalement une tête de balayage giratoire portant un miroir, et agencée pour pouvoir osciller dans deux plans perpendiculaires, et tourner autour de l'axe d'intersection desdits plans. De tels lecteurs permettent de pallier les inconvénients des lecteurs précités et offrent une bonne fiabilité de lecture même avec des vitesses de convoyage relativement élevées. Toutefois, ils nécessitent des éléments de base spécifiques de fabrication délicate relevant quasiment du domaine de l'horlogerie, et sont donc d'un coût de revient élevé.

La présente invention vise à pallier l'ensemble des inconvénients des lecteurs multidirectionnels actuels et a pour principal objectif de fournir un lecteur multidirectionnel réalisé à partir d'éléments de bases standards, offrant une bonne fiabilité même avec des vitesses de convoyage élevées.

Un autre objectif de l'invention est de fournir un lecteur multidirectionnel présentant une quantité illimitée de modes de balayage et reconfigurable instantanément.

A cet effet, l'invention vise un dispositif du type décrit dans le préambule ci-dessus, et se caractérisant en ce que :
- les moyens de déviation comportent :
   . un premier miroir s'étendant longitudinalement selon un axe (Y), disposé de façon à intercepter le faisceau incident délivré par la source d'éclairage, et monté sur des moyens moteurs aptes à le faire osciller avec une amplitude déterminée entre deux positions autour de l'axe (Y),
   . un second miroir s'étendant longitudinalement selon un axe (X) orthogonal à l'axe (Y), disposé de façon à intercepter le faisceau dévié par le premier miroir et à le réfléchir vers les plans-objets, ledit second miroir étant monté sur des moyens moteurs aptes à le faire osciller avec une amplitude déterminée entre deux positions autour de l'axe (X),
   . des moyens de commande des moyens moteurs aptes à permettre de modifier la fréquence d'oscillation desdits moyens moteurs, et adaptés pour permettre de les alimenter :
- soit avec une fréquence adaptée pour engendrer une oscillation du miroir associé entre ses deux positions, de façon à obtenir un mode oscillatoire,
- soit avec une fréquence élevée apte à sensiblement stabiliser le miroir associé entre ses deux positions, en commandant de plus une variation continuelle du rapport cyclique d'alimentation, de façon à obtenir un mode dit de position.
- les moyens de rétro-collection sont indépendants des premier et second miroirs.

L'invention a donc consisté, en premier lieu, à réaliser un dispositif optoélectronique dont les moyens de déviation et les moyens de rétro-collection sont indépendants les uns des autres, ce qui autorise d'utiliser, comme moyens de déviation, des petits miroirs présentant une faible inertie générant la seule fonction de balayage, et reconfigurables instantanément du fait de leur faible inertie.

De plus, du fait de cette faible inertie des miroirs, la fréquence d'oscillation de ces derniers peut être très élevée, et donc conduire à un balayage très rapide et à un temps de réponse de lecture très faible qui autorisent des vitesses de convoyage élevées.

En outre, en fonction des fréquences d'oscillation et du déphasage entre miroirs, on peut obtenir des figures et des directions de balayage en quantité illimitée, instantanément modifiables, par exemple par commande logiciel, et on peut donc lire des codes se présentant sous des orientations quelconques.

Ce dispositif optoélectronique est toutefois particulièrement adapté pour la lecture de codes orientés soit selon l'axe X, soit selon l'axe Y avec, comme précité, possibilité de changement instantanée entre les positions de balayage.

Ces modes de balayage sont, en effet, obtenus en engendrant :
- une oscillation d'un desdits miroirs selon son mode oscillatoire qui conduit à réaliser une ligne de balayage selon un des axes X ou Y,
- une stabilisation de l'autre miroir selon son mode de position qui conduit à réaliser un déplacement continuel alternatif de la ligne de balayage selon l'autre axe X ou Y, grâce à la variation du rapport cyclique d'alimentation.

Ces balayages cycliques s'avèrent dans la pratique très "agressifs" et conduisent à autoriser des vitesses de convoyage élevées.

Selon une autre caractéristique de l'invention, les moyens moteurs sur lesquels sont montés les premier et second miroirs consistent en des moteurs pas à pas associés chacun à des moyens de butée mécanique aptes à permettre de caler l'oscillation entre deux pas dudit moteur.

En premier lieu, de tels moteurs pas à pas constituent des éléments standards du commerce qui conduisent à un coût de fabrication peu élevé. De plus, les moyens de butée forcent les moteurs pas à pas à rester dans la zone d'attraction du pas défini et garantissent contre tout décalage accidentel de l'orientation de l'axe de ces moteurs pouvant résulter de chocs, du changement de type de balayage, de l'arrêt du dispositif...

Selon une autre caractéristique de l'invention, les moyens de rétro-collection comprennent un collecteur de lumière non-imageant disposé de façon à recevoir les faisceaux réfléchis et à collecter ces derniers vers le capteur.

Ce collecteur de lumière non-imageant présente, en outre, préférentiellement, une forme de révolution autour d'un axe, et une section décroissante d'une face d'entrée des faisceaux réfléchis vers le capteur. La forme de ce collecteur est ainsi avantageusement paraboloïdale.

Selon une autre caractéristique de l'invention, la source d'éclairage comporte une diode laser associée à une optique de localisation.

D'autres caractéristiques, buts et avantages de l'invention ressortiront de la description détaillée qui suit en référence aux dessins annexés qui en représentent à titre d'exemple non limitatif un mode de réalisation préférentiel. Sur ces dessins qui font partie intégrante de la présente description :
- la figure 1 est une vue en perspective en mode éclaté des principaux éléments constitutifs du dispositif optoélectronique conforme à l'invention,
- la figure 2 est une vue en perspective représentant le montage des moyens de déviation,
- la figure 3 est une vue en perspective représentant l'agencement de la source d'éclairage, des moyens de déviation et de rétro-collection,
- la figure 4 est une vue en perspective en mode éclaté des éléments constitutifs des moyens de rétro-collection,
- les figures 5a, 5b et 6a, 6b sont des schémas illustrant respectivement les deux modes d'alimentation des moteurs pas à pas,
- la figure 7 est un schéma synoptique de la commande de moteurs pas à pas du dispositif optoélectronique selon l'invention,
- la figure 8a est un schéma électrique d'un moteur pas à pas,
- et la figure 8b est un tableau représentant les séquences d'interruption de ce moteur pas à pas.

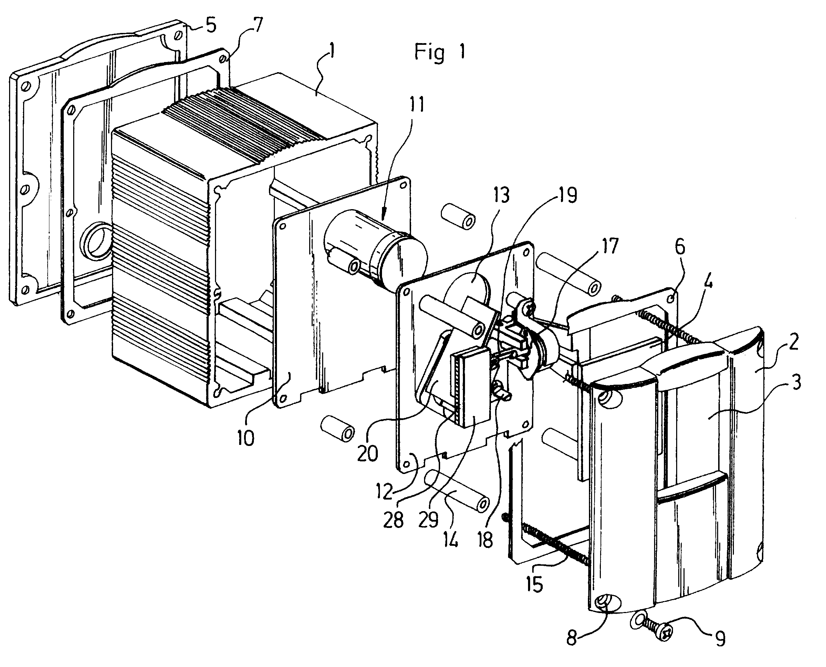

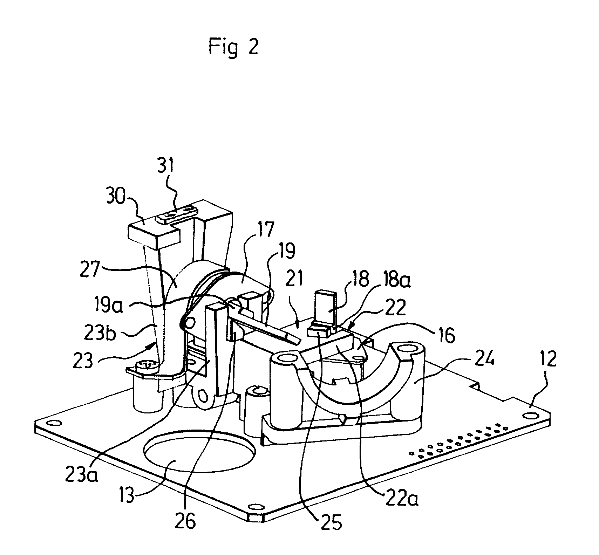

Le dispositif optoélectronique conforme à l'invention représenté aux figures 1 et 2 est particulièrement destiné à être utilisé dans des applications industrielles, en poste fixe devant un convoyeur en vue de l'identification de codes à barres apposés sur des objets défilant sur ce convoyeur.

Ce dispositif comprend, en premier lieu, un boîtier tubulaire 1 de forme générale parallélépipédique rectangle obturé par une plaque de façade avant 2 présentant une fenêtre de lecture 3 logeant une vitre 4, et une plaque de façade arrière 5, avec interposition de joints 6, 7 entre lesdits boîtiers et plaques de façade.

En outre, les plaques de façade avant 2 et arrière 5 sont percées, au droit de chacun de leur angle, d'orifices tels que 8 permettant de solidariser ces dernières au boîtier 1 au moyen de vis 9.

Ce boîtier 1 renferme deux cartes :
- une carte principale 10 portant les moyens de rétro-collection 11 et une interface de commande (non représentée),
- une carte dite d'émission optique 12 portant la source d'éclairage et les moyens de déviation du faisceau incident.

Ces deux cartes 10, 12 sont disposées à l'intérieur du boîtier 1 de façon que la carte d'émission optique 12 soit interposée entre la plaque de façade 2 et la carte principale 10, ladite carte d'émission optique étant percée d'un orifice 13 au travers duquel s'étendent les moyens de rétro-collection 11.

Ces deux cartes 10, 12 sont percées d'orifices à chacun de leur angle et leur positionnement à l'intérieur du boîtier 1 est obtenu au moyen d'entretoises cylindriques telles que 14 montées autour de tiges telles que 15 dotées d'extrémités filetées permettant de solidariser lesdites tiges respectivement dans des manchons taraudés disposés sur la face interne de la plaque de façade 2, et à la carte principale 10 au moyen d'écrous.

En premier lieu, les moyens de déviation comprennent deux moteur pas à pas 16, 17 à vingt pas, possédant deux enroulements bipolaires, portant chacun un miroir 18, 19 prolongé à cet effet par un tronçon de base 18a, 19b de section rectangulaire solidarisé à l'axe du moteur associé.

La source d'éclairage consiste quant à elle en une diode laser associée à une optique de localisation représentée de façon générale sous la référence 20 aux figures.

Ces moteurs pas à pas 16, 17 et cette diode laser 20 sont montés sur un bâti 21 apte à être solidarisé sur la carte d'émission optique 12, et comportant notamment trois berceaux 22, 23, 24 aptes à loger chacun un de ces éléments.

A cet effet, les berceaux 22, 23 des moteurs pas à pas s'étendent respectivement parallèlement et orthogonalement par rapport à la carte d'émission optique 12, et comportent chacun deux arches parallèles telles que 22a, 23a entre lesquelles viennent se loger lesdits moteurs, et à travers lesquelles s'étend le miroir 18, 19. De plus, une des arches 22a, 23a de chacun de ces berceaux 22, 23 présente une face externe dotée d'un élément de butée, respectivement 25, 26, apte à s'étendre en regard de la base 18a, 19b du miroir correspondant 18, 19 de façon à limiter l'oscillation de ce dernier et de la caler entre deux pas du moteur pas à pas. En dernier lieu, les moteurs pas à pas 16, 17 sont solidarisés dans leurs berceaux 22, 23 au moyen de bras tels que 27.

La diode laser 20 est quant à elle maintenue dans son berceau 24 au moyen d'un portique 50 fixé sur ce dernier, et sur la barre duquel est montée une cellule à effet Peltier 28, elle-même revêtue d'une plaque de mousse thermique 29.

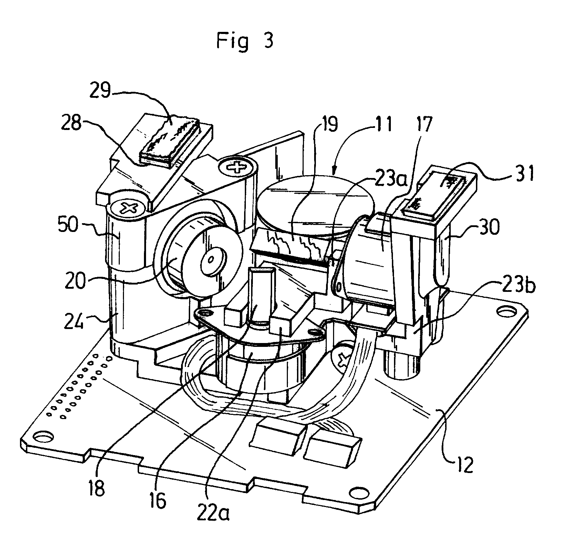

Tel que représenté à la figure 3, l'arche 23b du berceau 23, est par ailleurs prolongée par une aile 30 s'étendant orthogonalement par rapport à la carte d'émission optique 12 et dont la face supérieure est revêtue d'une plaque de mousse thermique 31.

La hauteur de cette aile 30 ainsi que celle du portique 50 sont adaptées pour que les plaques de mousse 29, 31 viennent au contact de la plaque de façade 2 et assurent d'une part, une absorption du jeu et d'autre part, un pont thermique qui conduit le boîtier à jouer un rôle de radiateur.

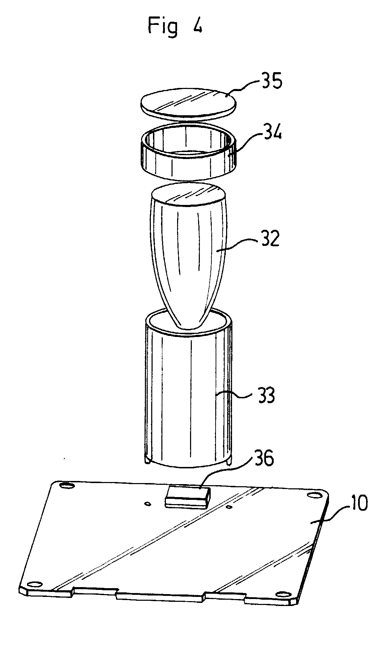

Les moyens de rétro-collection 11 comportent quant à eux, tel que représenté à la figure 4 un collecteur de lumière non-imageant 32 de forme paraboloïdale, soit réalisé en un matériau plein tel que du "Plexiglas" (marque déposée), soit creux avec des faces internes réfléchissantes.

Ce collecteur 32 est logé à l'intérieur d'un tube 33 solidarisé à la carte principale 10 et sur l'extrémité duquel vient se visser une bague 34 portant un filtre polarisant 35 destiné à permettre de s'affranchir des variations de lumière et d'éviter de saturer le capteur 36 disposé en regard dudit collecteur.

De tels moyens de rétro-collection 11, indépendants des miroirs 18, 19 ont pour avantage de recueillir la lumière réfléchie par le spot laser où qu'il soit dans la zone de lecture du dispositif.

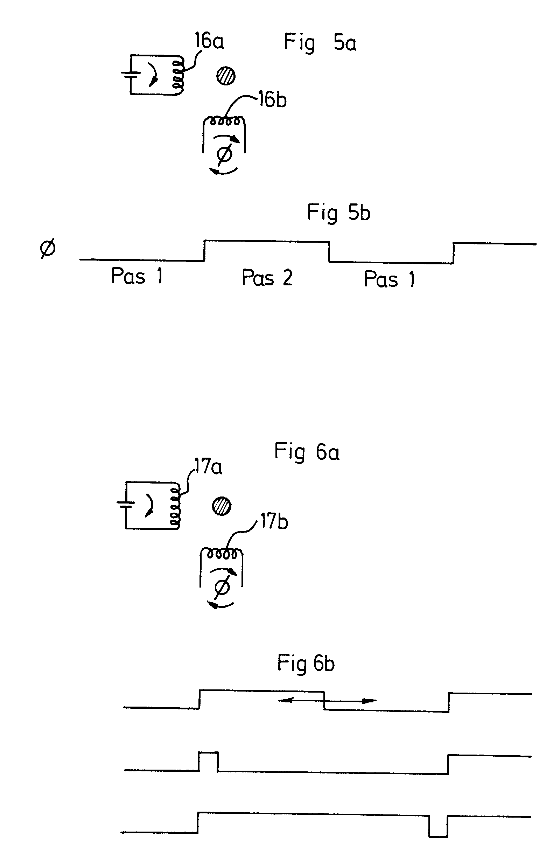

Les figures 5a, 5b, 6a, 6b représentent les deux modes, oscillatoire et de position, de commande des moteurs pas à pas 16, 17.

Selon le mode oscillatoire représenté à la figure 5a, un des enroulements 16a est alimenté en continu, tandis que l'autre enroulement 16b est alimenté périodiquement avec inversion de polarité aux bornes avec une fréquence d'oscillation de l'ordre de 250 Hz.

Ce mode oscillatoire conduit à obtenir une ligne principale de balayage par oscillation du miroir correspondant 18 ou 19 entre deux pas du moteur pas à pas 16 ou 17, tel que représenté à la figure 5b.

Selon le mode de position représenté à la figure 6a,un des enroulements 17a est alimenté en continu, tandis que l'autre enroulement 17b est alimenté périodiquement avec inversion de polarité aux bornes avec une fréquence supérieure à 2,5 KHz, avec, en outre, tel que représenté à la figure 6b, une variation continuelle du rapport cyclique d'alimentation.

En premier lieu, une telle fréquence d'alimentation conduit à réduire l'amplitude d'oscillation de telle sorte que le miroir se trouve stabilisé. De plus, la variation continuelle du rapport cyclique d'alimentation conduit à déséquilibrer ce miroir et à obtenir un balayage secondaire selon lequel la ligne de balayage obtenue grâce à un miroir 18 ou 19 en mode oscillatoire se déplace cycliquement grâce au mode de position du deuxième miroir 19 ou 18, selon un axe perpendiculaire à ladite ligne de balayage. Il convient de signaler qu'une telle solution présente, en outre, l'avantage de permettre de combattre les frottements secs.

Il est à noter que les moteurs pas à pas 16, 17 peuvent être commandés l'un en mode oscillatoire, l'autre en mode de position tel que décrit ci-dessus. Ils peuvent également être alimentés tous deux en mode oscillatoire de façon à obtenir en fonction des déphasages un balayage en forme de ligne oblique, des figures de Lissajous...

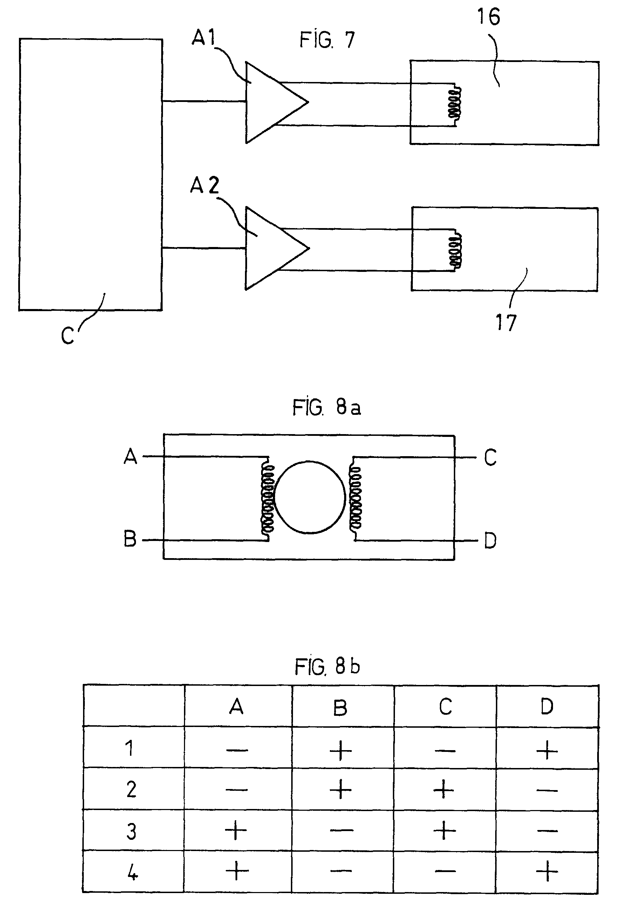

L'obtention de ces différents modes de balayage est commandée de façon classique, tel que représenté à la figure 7, à partir d'un micro-calculateur C programmé pour délivrer des signaux de commande, d'alimentation des deux moteurs pas à pas 16, 17, après amplification desdits signaux par le biais de circuits d'amplification A1, A2.

Les modes de balayage oscillatoire et de position sont quant à eux obtenus, pour le moteur pas à pas 16 ou 17 représenté à la figure 8a, en choisissant deux états adjacents qui peuvent être, si l'on se réfère au tableau de la figure 8b, les états 2 et 3, qui permettent d'obtenir :
- une alimentation en continu des pôles C et D,
- une inversion périodique de polarité des pôles A et B.

## Revendications

1. Dispositif optoélectronique d'acquisition multidirectionnelle d'images de plans-objets, notamment de codes à barres du type comprenant :
- une source d'éclairage (20) apte à délivrer un faisceau incident d'éclairage,
- des moyens de déviation (18, 19) du faisceau incident aptes à amener ledit faisceau à balayer les plans-objets selon des modes de balayage prédéterminés,
- un capteur électronique (36) d'acquisition des images,
- et des moyens de rétro-collection (11) aptes à permettre de former des images sur le capteur, ledit dispositif optoélectronique étant caractérisé en ce que :
- les moyens de déviation comportent :
. un premier miroir (18) s'étendant longitudinalement selon un axe (Y), disposé de façon à intercepter le faisceau incident délivré par la source d'éclairage (20), et monté sur des moyens moteurs (16) aptes à le faire osciller avec une amplitude déterminée entre deux positions autour de l'axe (Y),
. un second miroir (19) s'étendant longitudinalement selon un axe (X) orthogonal à l'axe (Y), disposé de façon à intercepter le faisceau dévié par le premier miroir (18) et à le réfléchir vers les plans-objets, ledit second miroir étant monté sur des moyens moteurs (17) aptes à le faire osciller avec une amplitude déterminée entre deux positions autour de l'axe (X),
. des moyens de commande des moyens moteurs (16, 17) aptes à permettre de modifier la fréquence d'oscillation desdits moyens moteurs, et adaptés pour permettre de les alimenter :
- soit avec une fréquence adaptée pour engendrer une oscillation du miroir (18, 19) associé entre ses deux positions, de façon à obtenir un mode oscillatoire,
- soit avec une fréquence élevée apte à sensiblement stabiliser le miroir (19, 18) associé entre ses deux positions, en commandant de plus une variation continuelle du rapport cyclique d'alimentation, de façon à obtenir un mode dit de position.
- les moyens de rétro-collection (11) sont indépendants des premier (18) et second (19) miroirs.

2. Dispositif optoélectronique selon la revendication 1, caractérisé en ce que les moyens moteurs sur lesquels sont montés les premier (18) et second (19) miroirs consistent en des moteurs pas à pas (16, 17) associés chacun à des moyens de butée mécanique (25, 26) aptes à permettre de caler l'oscillation entre deux pas dudit moteur.

3. Dispositif optoélectronique selon l'une des revendications 1 ou 2, caractérisé en ce que les moyens de rétro-collection comprennent un collecteur de lumière non-imageant (32) disposé de façon à recevoir les faisceaux réfléchis et à collecter ces derniers vers le capteur.

4. Dispositif optoélectronique selon la revendication 3, caractérisé en ce que le collecteur de lumière non-imageant (32) présente une forme de révolution autour d'un axe, et une section décroissante d'une face d'entrée des faisceaux réfléchis vers le capteur.

5. Dispositif optoélectronique selon la revendication 4, caractérisé en ce que le collecteur de lumière non-imageant (32) présente une forme paraboloïdale.

6. Dispositif optoélectronique selon l'une des revendications précédentes, caractérisé en ce que la source d'éclairage (20) comporte une diode laser associée à une optique de localisation.
